# EUROPEAN PATENT SPECIFICATION

(11) **EP 1 486 009 B1**
(45) Date of publication and mention of the grant of the patent: **13.07.2005**
(21) Application number: 03705608.2
(22) Date of filing: 22.02.2003
(51) Int. Cl.: H04B 3/56

(54) **SUPPRESSION FILTER**
UNTERDRÜCKÜNGSFILTER
FILTRE DE SUPPRESSION

(30) Priority: 22.02.2002 SE 0200553
(43) Date of publication of application: 15.12.2004
(73) Proprietor: Schneider Electric Powerline Communications AB, 651 21 Karlstad (SE)
(72) Inventor: HANSEN, Ake, S-653 51 Karlstad (SE)
(74) Representative: Westman, Per Börje Ingemar
(86) International application number: PCT/SE2003/000271
(87) International publication number: WO 2003/071709

(56) References cited:
- EP-A2- 1 003 295
- US-B1- 6 282 405
- DATABASE WPI Week 200317, Derwent Publications Ltd., London, GB; Class W02, AN 1996-103038, XP002959034 & JP 3 373 659 B2 (SANEISHA SEISAKUSHO KK) 04 February 1996

## Description

### TECHNICAL FIELD OF THE INVENTION

The present invention relates to a suppression filter, especially for a communication network over a power line network.

### BACKGROUND OF THE INVENTION

The applicant is developing a solution for using the power line network into a high-class information infrastructure capable of handling the high demands that users and network operators have on the next generation IP-based multimedia services. The technology is in a suite of products ranging from plug & play end-user modems to reliable and robust network infrastructure. The benefits of using the power line network for communication is that the network is already in place and that it is omni-present, a normal house has power sockets in almost every corner. To the user, this means, for example convenient and cost effective Internet access.

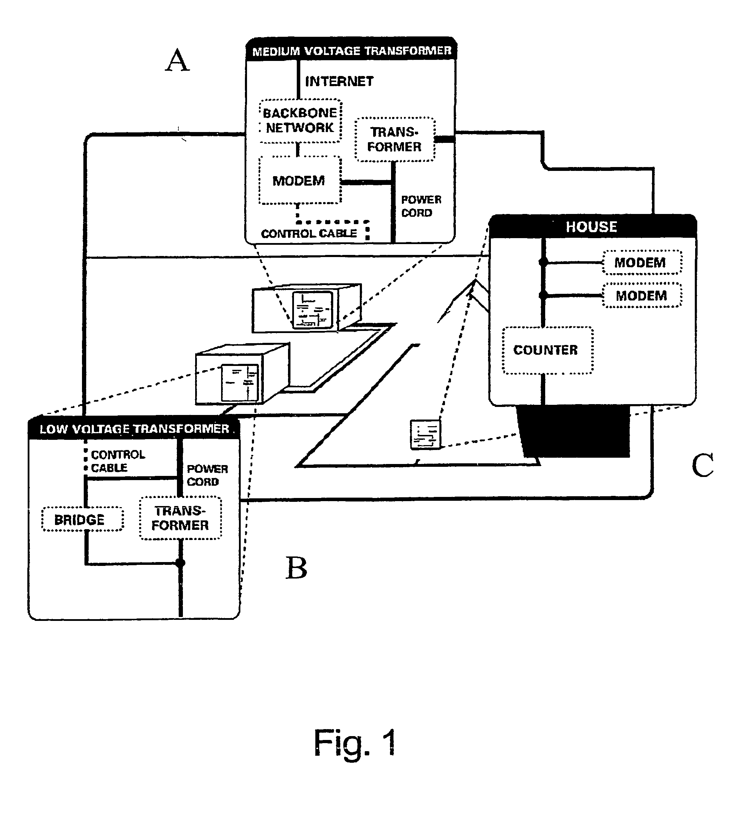

Thus, a new method of transmitting digital information over the mains network and/or distribution network is provided. The schematic view of fig.1 illustrates an example of a solution provided by the applicant. In a first step, shown in block A, information, such as digital, voice and/or image data is modulated and transformed onto the mains distribution network in a medium voltage transformer. Before supplying the power to household, it is transformed into low voltage electricity, i.e. block B, in a low voltage transformer. At the user premises, e.g. a house, the information on the power line is transformed to a suitable data by means of modems, connected directly to the power line, see block C.

In the transmission network, a band suppression filter or band stop filter is used, which is a filter that attenuates, usually to very low levels, all frequencies between two non-zero, finite limits and passes all frequencies not within the limits. A band-stop filter may be designed to stop a specified band of frequencies but usually only attenuates them below some specified level.

A high-frequency suppression is usually coupled on a power line against a plant or branching and comprises a tuning arrangement and relatively large inductor, through which a low frequency current flows. The suppression is provided, so that it amongst others stands the operating current loss-heat and mechanical strains due to the short-circuit currents.

An exemplary prior-art filter is known for instance from EP-A-1003295.

In the transmission network, preferably the power line, an applied ferrite core conductor is considered to have a constant inductance and reactance with respect to a radio signal, flowing through the conductor. The inductance can be defined as *L = N*² * µ * µ_{*r*} /(*I* / A), wherein N is the number of turns of the winding, µ is permeability, µ_{*r*} is material constant, *I* is the wire length and A is the core area. The material constant is µ_{*r*} invariable for unsaturated currents through the ferrite core. If an alternating load-current having sufficient amplitude is applied to the conductor, the core will saturate and µ_{*r*} will eventually approach 1. This means that the radio signal in the conductor will not be blocked in the desired extend. The inductance will vary with respect to the frequency of the sinus envelope having maximum values at about zero-crossings.

### SUMMARY OF THE INVENTION

The main object of the preferred embodiment of the present invention is to present a novel suppression filter, preferably for frequencies about 1-50 MHz, which solves above identified problem, and which has a small size and good performance. Moreover, designed as a band-stop filter, the arrangement according to the preferred embodiment of the invention will decrease noise at out of band region.

Therefore, a suppression filter suitable for a power line data transmission network is provided, which compnses a primary and a secondary side. The primary side comprises a primary winding and a ferrite core provided with an additional winding and said secondary side comprises a HF coil comprising a ferrite rod provided with a winding. The filter is arranged to function as a current transformer, which generates an opposite secondary flow to a follow in said power line, so that a difference between the flows becomes almost zero and the core remains unsaturated. A radio signal (I_{signal}) is coupled to the secondary side and picked up with said HF coil. The secondary side is provided with a capacitance.

The invention also relates to a method of enhancing signal quality in a power line based data transmission network by means of a suppression filter, comprising a primary side and a secondary side. The method comprises: arranging said primary side with a primary winding and a ferrite core provided with an additional winding and said secondary side with a HF coil comprising a ferrite rod provided with a winding. The method is further characterised by said filter being arranged to function as a current transformer, which generates an opposite secondary flow to a follow in said power line, so that a difference between the flows becomes almost zero and the core remains unsaturated.

### BRIEF DESCRIPTION OF THE DRAWINGS

In the following, the preferred embodiments of the invention will be further described in a non-limiting way with reference to the accompanying drawings in which:
- Fig. 1: is a block diagram of transmission system,
- Fig. 2: illustrates a wiring diagram according to a first embodiment of the invention,
- Fig. 3: illustrates a wiring diagram according to a second embodiment of the invention,
- Fig. 4: illustrates a schematic testing set-up for testing a filter according to the invention,
- Fig. 5: illustrates frequency sweep through a saturated core,
- Fig. 6: illustrates a representative voltage on the measuring loop at an unsaturated core,
- Fig. 7: illustrates frequency sweep through a core with a secondary winding and inductance,

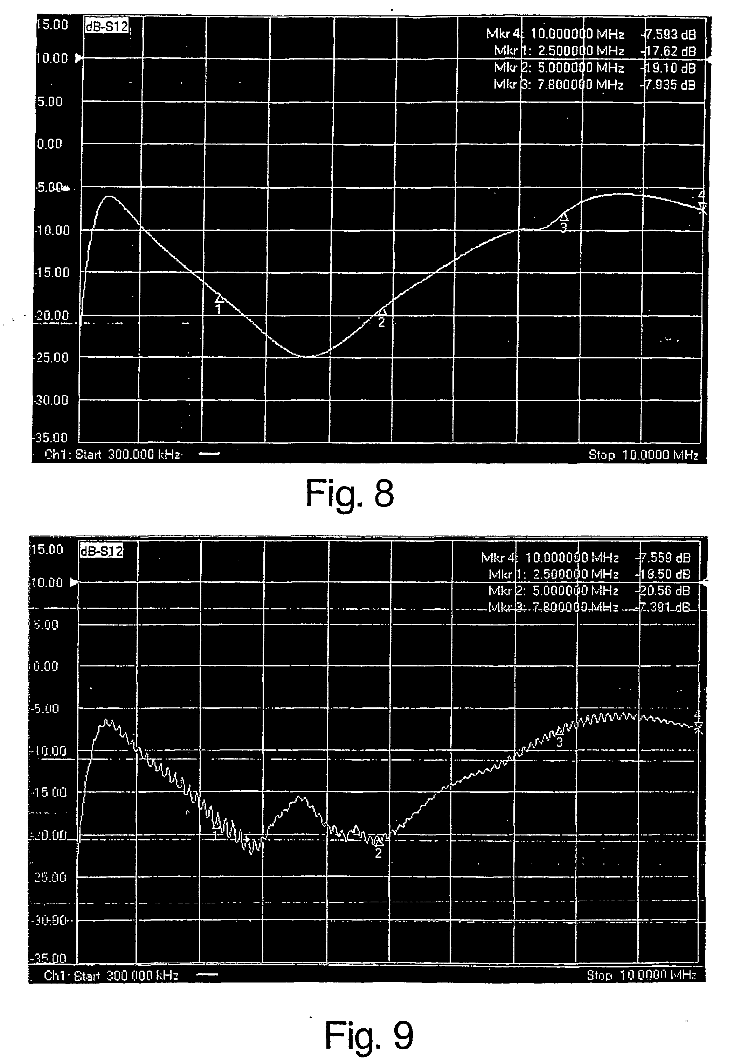

- Fig. 8: illustrates frequency sweep through an unsaturated core with a tuned secondary winding and not energised, and
- Fig. 9: illustrates frequency sweep through an unsaturated core with a tuned secondary winding and energised.

### DETAILED DESCRIPTION OF THE EMBODIMENTS

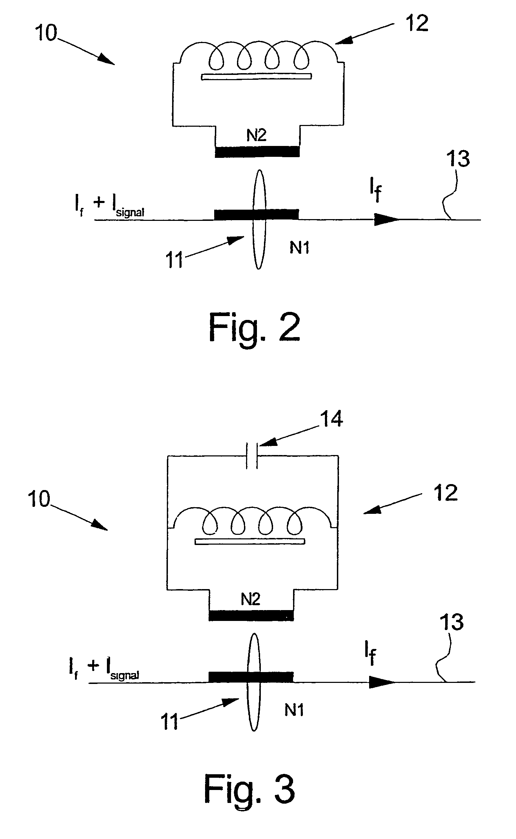

As mentioned above, the object is to solve the problem of having an altering inductance. According to Fig. 2, this is solved by means of an additional winding arranged on the ferrite core. In Fig. 2, reference numeral 10 denotes a transformer comprising a primary side consisting of a ferrite core 11 winded with an additional winding N2 and a secondary side 12 comprising a HF coil consisting of coiled ferrite rod. The secondary side provides for a closed secondary circuit. A conductor is denoted with 13, through which an altering current If and a radio signal current I_{signal} flows.

Thus, the arrangement will operate as current transformer at low frequencies, which generates an opposite secondary flow. The difference between the flows will become almost zero and the core remains unsaturated. The radio signal (corresponding to I_{signal}) is coupled to the secondary side and picked up by the HF coil due to the potential drop over the reactance.

Fig. 3 is a wiring diagram similar to Fig. 2, but a capacitor 14 is arranged at parallel to the coil of the secondary side 12. This arrangement provides for suppression of desired frequencies and a suppression filter is obtained.

To be able to investigate the changes of the damping ability of the filter following test is carried out, in which a saturated and unsaturated core is used. The set-up includes the saturated core 40, a bobbin coiled on a ferrite rod 41, an oscilloscope 42, a number of HF choke coils 43, spectrum analysers 44, couplers 45, network analyser 46, signal generator 47, loads 48, and test loop 49. The set-up is fed by AC voltage.

Following parameters are valid:

| | |
|---|---|
| Winded ferrite rod | 50 µH |
| N1 | 10 |
| N2 | 17 |
| Loads | electric heater elements, 400 W |
| Coil | AMIDONS FT140-77 |
| C | 100P, f₀= 5MHz |

The dimension of the core is small, which allows easy saturation. The primary winding, N1, was computed to allow enough saturation flow.

The attenuation measurement through the core was done by the signal generator (Put = 10 dBm and frequency 5,5 MHz) and the spectrum analyser. Following values were obtained:

| | |
|---|---|
| 0 element (load) connected | D = -34 dB |
| 1 element (load) connected | D = -30,72 dB |
| 2 elements (load) connected | D = -25 dB. |

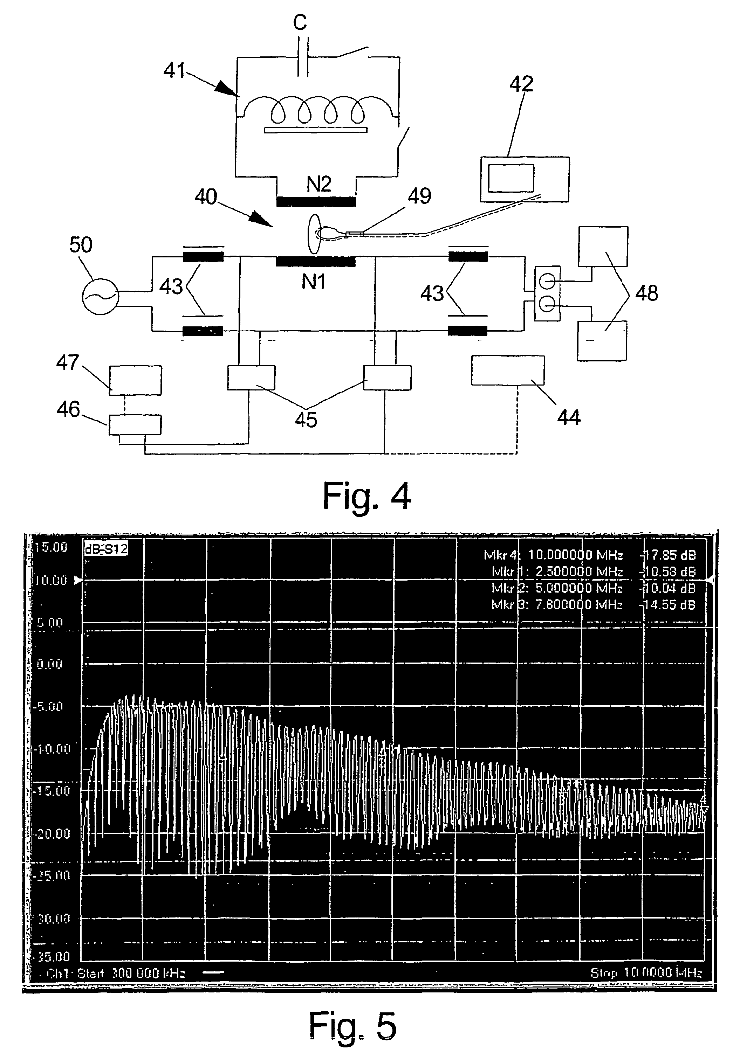

The core was scanned by a network-analyser with respect to S21 (attenuation). The result is illustrated in Fig. 5. The comb pattern is the result of the core alternating between the saturated and unsaturated states in 100 Hz and interferes with the sweep frequency of the network- analyser. The maximum peaks show the damping when the core is saturated and the minimum peaks show the damping in unsaturated state when the zero crossing passes 50 Hz. The difference in the damping is mostly in the band 1, about 20 dB and at least 3 dB.

In a second step a secondary coiling was winded on the core and connected to an inductance winded on a ferrite rod. The inductance has a value of approx. 50 µH, which corresponds to 314Ω at 1 MHz. The reactance is less than 50 Ω, which is a target value for the nominal impedance.

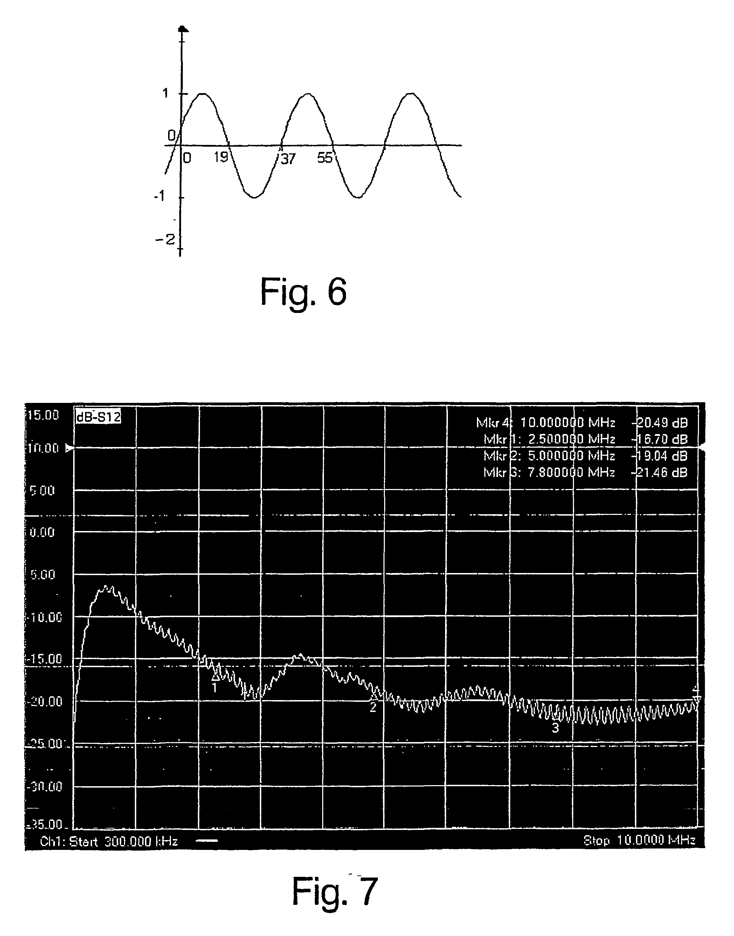

S21 is measured by means of the network analyser and the result is illustrated in Fig. 6. It is apparent that the core functions in unsaturated state and the suppression graph is smooth, as the flow was controlled by the measuring loop. The minimum suppression is within the link band approx. -15 dB and the maximum approx. -22 dB.

The secondary winding is completed with a tuning capacitor, C, so that the resonance frequency lands in the middle of the link band 1, approx. 5 MHz. Firstly, the core is swept with 220 V disconnected and then connected. The result is illustrated in Figs. 6 and 7. The tuned secondary winding gives a peak suppression of approx. -20 dB at 5 MHz for the energized core and connected load.

The conclusion is that the saturated and unsaturated cores show the signification of the suppression at mentioned states. The suppression of a clean core also dependents on the load current at 50 Hz. During the transmission between modems in a power line network, the data-set can burst at 100 Hz intervals. The phenomenon occurs on some parts of the pass-band at the zero crossings when the cores come out of the saturation.

The invention is not limited to the shown embodiments but can be varied in a number of ways without departing from the scope of the appended claims and the arrangement and the method can be implemented in various ways depending on application, functional units, needs and requirements etc.

## Claims

1. A suppression filter (10) comprising a primary side and a secondary side (12), and suitable for a power line data transmission network,
**characterised in that**:
said primary side comprises a primary winding (N1) and a ferrite core (11) provided with an additional winding (N2) and said secondary side (12) comprises a HF coil comprising a ferrite rod provided with a winding.

2. The filter of claim 1,
**characterised in**
**that** said filter is arranged to function as a current transformer, which generates an opposite secondary flow to a follow in said power line, so that a difference between the flows becomes approximately zero and the core remains unsaturated.

3. The filter of claim 2,
**characterised in**
**that** said secondary side is arranged to be coupled to a radio signal (I_{signal}) and picked up with said HF coil.

4. The filter of claim 1,
**characterised in**
**that** said secondary side is provided with a capacitance (14).

5. A method of enhancing signal quality in a power line based data transmission network by means of a suppression filter (10), comprising a primary side and a secondary side (12), the method comprising:
arranging said primary side with a primary winding (N1) and a ferrite core (11) provided with an additional winding (N2) and said secondary side (12) with a HF coil comprising a ferrite rod provided with a winding.

6. The method of claim 5, wherein said filter is arranged to function as a current transformer, which generates an opposite secondary flow to a follow in said power line, so that a difference between the flows becomes almost zero and the core remains unsaturated.

## Patentansprüche

1. Unterdrückungsfilter (10), das eine Primärseite und eine Sekundärseite (12) aufweist, und das für ein stromleitungsbasiertes Datenübertragungsnetzwerk geeignet ist,
**dadurch gekennzeichnet,**
**dass** die Primärseite eine Primärwicklung (N1) und einen Ferritkern (11) aufweist, der mit einer zusätzlichen Wicklung (N2) versehen ist, und dass die Sekundärseite (12) eine HF-Spule aufweist, die einen Ferritstab aufweist, der mit einer Wicklung versehen ist

2. Filter nach Anspruch 1,
**dadurch gekennzeichnet,**
**dass** das Filter so angeordnet ist, dass es als Stromwandler dient der einen zu einem Strom in der Stromleitung gegenläufigen Sekundärstrom erzeugt, so dass eine Differenz zwischen den Strömen annähernd zu Null wird und der Kern ungesättigt bleibt.

3. Filter nach Anspruch 2,
**dadurch gekennzeichnet,**
**dass** die Sekundärseite angeordnet ist, um an ein Radiosignal (I_{signal}) gekoppelt und mit der HF-Spule aufgenommen zu werden.

4. Filter nach Anspruch 1,
**dadurch gekennzeichnet,**
**dass** die Sekundärseite mit einer Kapazität (14) versehen ist.

5. Verfahren zum Erhöhen der Signaiqualität in einem stromleitungsbasierten Datenübertragungsnetzwerk mittels eines Unterdrückungsfilters (10), das eine Primärseite und eine Sekundärseite (12) aufweist.
**gekennzeichnet durch**
Versehen der Primärseite mit einer Primärwicklung (N1) und einem Ferritkern (11), der mit einer zusätzlichen Wicklung (N2) versehen ist, und der Sekundärseite (12) mit einer HF-Spule, die einen Ferritstab aufweist, der mit einer Wicklung versehen ist.

6. Verfahren nach Anspruch 5,
wobei das Filter so angeordnet ist, dass es als Stromwandler dient, der einen zu einem Strom in der Stromleitung gegenläufigen Sekundärstrom erzeugt, so dass eine Differenz zwischen den Strömen annähernd zu Null wird und der Kern ungesättigt bleibt.

## Revendications

1. Filtre de suppression (10) comportant un côté primaire et un côté secondaire (12), et adapté à un réseau de transmission de données sur ligne de transport d'énergie,
**caractérisé en ce que** :
ledit côté primaire comporte un enroulement primaire (N1) et un noyau en ferrite (11) muni d'un enroulement supplémentaire (N2) et ledit côté secondaire (12) comporte une bobine HF comportant une tige en ferrite munie d'un enroulement.

2. Filtre selon la revendication 1,
**caractérisé en ce que**
ledit filtre est conçu pour fonctionner en tant que transformateur de courant, qui génère un écoulement secondaire opposé au suivant dans ladite ligne de transport d'énergie, de sorte qu'une différence entre les écoulements devient approximativement égale à zéro et le noyau reste insaturé.

3. Filtre selon la revendication 2,
**caractérisé en ce que**
ledit côté secondaire est conçu pour être couplé à un signal radio (I_{signal}) et capté à l'aide de ladite bobine HF.

4. Filtre selon la revendication 1,
**caractérisé en ce que**
ledit côté secondaire est muni d'une capacité (14).

5. Procédé pour accentuer la qualité de signal dans un réseau de transmission de données basé sur une ligne de transport d'énergie par l'intermédiaire d'un filtre de suppression (10), comportant un côté primaire et un côté secondaire (12), le procédé comportant les étapes consistant à :
munir ledit côté primaire d'un enroulement primaire (N1) et d'un noyau en ferrite (11) muni d'un enroulement supplémentaire (N2) et ledit côté secondaire (12) d'une bobine HF comportant une tige en ferrite munie d'un enroulement.

6. Procédé selon la revendication 5, dans lequel ledit filtre est conçu pour fonctionner en tant que transformateur de courant, qui génère un écoulement secondaire opposé au suivant dans ladite ligne de transport d'énergie, de sorte qu'une différence entre les écoulements devient pratiquement égale à zéro et le noyau reste insaturé.
